# EUROPÄISCHE PATENTSCHRIFT

(11) **EP 4 318 760 B1**
(45) Veröffentlichungstag und Bekanntmachung des Hinweises auf die Patenterteilung: **09.12.2026**
(21) Anmeldenummer: 22188578.3
(22) Anmeldetag: 03.08.2022
(51) Int. Cl.: H01M 50/224, H01M 50/249, B32B 15/01, C21D 1/18, C22C 38/02, C22C 38/04, C22C 38/06, C22C 38/12, C22C 38/14, C22C 38/32, C22C 38/38, B60K 1/04, C21D 1/673, C21D 7/13, C21D 9/48

(54) **VERFAHREN ZUR HERSTELLUNG EINER BATTERIEWANNE FÜR EIN KRAFTFAHRZEUG**
METHOD OF CREATING A BATTERY COMPARTMENT FOR A MOTOR VEHICLE
PROCÉDÉ DE FABRICATION D'UN BAC À BATTERIE POUR UN VÉHICULE AUTOMOBILE

(43) Veröffentlichungstag der Anmeldung: 07.02.2024
(73) Patentinhaber: Benteler Automobiltechnik GmbH, 33102 Paderborn (DE)
(72) Erfinder: Frost, Georg, 32839 Steinheim (DE); Gehringhoff, Ludger, 33106 Paderborn (DE)
(74) Vertreter: Osterhoff, Utz

(56) Entgegenhaltungen:
- EP-A1- 1 516 938
- EP-A1- 3 544 082
- DE-A1- 102017 102 699

## Beschreibung

Die vorliegende Erfindung betrifft ein Verfahren zur Herstellung einer Batteriewanne für einen Batterieträger eines Kraftfahrzeuges mit den Merkmalen im Anspruch 1.

Aus dem Stand der Technik ist es bekannt, Kraftfahrzeuge im Straßenverkehr zu betreiben. Diese Kraftfahrzeuge werden entweder von Verbrennungskraftmaschinen angetrieben oder aber von Elektromotoren. Folglich werden elektrisch angetriebene Kraftfahrzeuge auch Elektrofahrzeuge oder Elektrokraftfahrzeuge genannt. Bei elektrisch angetriebenen Kraftfahrzeugen wird ein Energiespeicher benötigt, um Reichweiten von mehreren hundert Kilometern zu realisieren. Ein solcher Energiespeicher ist platz-, gewichts-, jedoch auch flächenintensiv. Zumeist wird ein Energiespeicher am oder im Unterboden eines Kraftfahrzeuges untergebracht.

Der Energiespeicher selbst ist aus wiederaufladbaren Energiespeicherzellen, auch Akkus bzw. Batterien oder Traktionsbatterien genannt, ausgebildet. Damit diese sowohl im Kraftfahrzeug mitgeführt werden können, jedoch auch vor Witterungseinflüssen geschützt sind und im Zweifel auch bei einem Fahrzeugcrash geschützt sind, werden die Energiespeicher in sog. Batterieträgern bzw. battery trays untergebracht. Battery trays sind dabei gebaute Hüllen, zumeist aufweisend eine Wanne und einen die Wanne verschließenden Deckel. Als Werkstoffe kommen sowohl Kunststoffwerkstoffe als auch metallische Werkstoffe in Frage.

Eine Batteriewanne dient dabei entweder zur Aufnahme von mindestens einer Batterie bzw. eines Batteriemoduls durch Einlegen der Batterie(n) in die Batteriewanne. Alternativ kann die Batteriewanne auch als Haube ausgebildet sein, welche über Batterie(n) gestülpt wird und einen Batteriehalter somit verschließt.

Aus der DE 10 2017 102 699 A1 ist Batterieträger zur Anordnung an einem Elektrokraftfahrzeug bekannt, bei welchem Abschnitte unterschiedliche Festigkeit aufweisen.

Aufgabe der vorliegenden Erfindung ist es, eine Batteriewanne bereit zu stellen, die gegenüber dem Stand der Technik einfach zu produzieren ist, eine hohe Langlebigkeit aufweist und im Crashverhalten eine gewisse Eigensteifigkeit mit sich bringt.

Die zuvor genannte Aufgabe wird erfindungsgemäß mit einen Verfahren mit den Merkmalen im Anspruch 1 gelöst.

Vorteilhafte Ausgestaltungsvarianten der vorliegenden Erfindung sind Gegenstand der abhängigen Ansprüche.

Das erfindungsgemäße Verfahren dient zur Herstellung einer Batteriewanne für einen Batterieträger eines Kraftfahrzeuges und ist gekennzeichnet durch folgende Verfahrensschritte:
- Bereitstellen einer Platine aus einer härtbaren Stahlblechlegierung, optional ist die Platine vorbeschichtet,
- Vollständiges Erwärmen auf eine Temperatur größer AC1, insbesondere größer AC3,
- Warmumformen und Presshärten der Platine, zu einer Batteriewanne mit einem flächigen Boden, davon umlaufend abstehenden Seitenwänden und von den Seitenwänden umlaufend abstehendem nach außen orientiertem Flansch,
- Randbeschnitt und/oder Lochen der Platine und/oder der umgeformten Batteriewanne bei einer Temperatur zwischen 400° und 700° C,
- Einstellen einer Zugfestigkeit zwischen 350 und 850MPa und einer Dehngrenze A50 von 10 bis 18 %.

Das erfindungsgemäße Verfahren zeichnet sich dabei dadurch aus, dass eine einstückige und werkstoffeinheitliche Platine bereitgestellt wird und in einem Warmumform- und Presshärtevorgang mithin mittels Tiefziehen die Batteriewanne hergestellt wird. Dabei wird die Warmumform- und Presshärtetechnologie angewendet, so dass eine Platine an einer verwendeten härtbaren Stahllegierung auf eine Temperatur größer AC1, insbesondere größer AC3 gebracht wird, auf welche die gesamte Platine vollständig und homogen erwärmt wird. Die AC1-Temperatur ist dabei eine Temperatur von ca. 700° bis 750° C. Die AC3-Temperatur wäre eine Temperatur von ca. 900 bis 950° C. Eine Batteriewanne kann somit als Wanne zur Aufnahme in Form von Einlegen von Batterien verwendet werden. Eine Batteriewanne kann jedoch auch als Deckel verwendet werden, wobei der Deckel dann über einen Batteriehalter gestülpt wird.

Weiterhin wird durch den Warmumform- und Presshärteprozess ein Martensitanteil in dem Werkstoffgefüge nach Abschluss des Presshärteprozesses von mindestens 5 % eingestellt. Der Martensitanteil überschreitet jedoch nicht 50 % und ist insbesondere kleiner 35 %. Insbesondere weist das Werkstoffgefüge eine Ferritmatrix mit Martensiteinschlüssen an den Korngrenzen auf. Der Ferritanteil beträgt besonders bevorzugt 50 % bis 80 %, der Martensitanteil bevozugt 10 % bis 35 %. Die restlichen Gefügebestandteile sind getempertes Bainit/Martensit und/oder Perlit.

Ein wesentlicher Vorteil liegt darin, dass gleichzeitig mit dem Warmumformen auch ein Randbeschnitt bzw. ein Lochen der umgeformten Batteriewanne durchgeführt wird. Insbesondere wird dies als Warmbeschnitt bzw. Warmlochen bei einer Temperatur zwischen 400° und 700° C durchgeführt.

Insgesamt wird somit bei der fertigen Batteriewanne eine Zugfestigkeit Rm eingestellt, zwischen 350 und 850 MPa, insbesondere 600 bis 750, bevorzugt 650 bis 720 MPa. Die Dehngrenze A50 beträgt 10 % bis 18 % und vorzugsweise 12 % bis 16 %.

Erfindungsgemäß hat sich herausgestellt, dass hierdurch eine Batteriewanne hergestellt werden kann, die eine hinreichende Festigkeit aufweist, um die Steifigkeitsanforderungen zu erfüllen, insbesondere, wenn diese in eine selbsttragende Karosserie eingebaut ist bzw. auch eine tragende Struktur mit übernimmt. Gleichzeitig ist eine hinreichende Duktilität gegeben, um im dauerhaften Betrieb eines Kraftfahrzeuges eine Rissbildung sicher zu vermeiden. Dauerschwingungen, die durch den Betrieb des Kraftfahrzeuges im Straßenverkehr auftreten können, sorgen somit, trotz eventueller Riefenbildungen aufgrund des Umformverfahrens, nicht zu einer Rissinitiierung oder Rissbildung. Die Batterien können somit im Innenraum der Batteriewanne sicher gelagert bleiben. Auch im Falle eines ungewollten Kraftfahrzeugcrashes weist die Batteriewanne eine hohe Eigensteifigkeit auf, bei gleichzeitig gutem Dehnvermögen, so dass sie sich verformt, ohne zu reißen. Der Karosserie wird somit eine hinreichende Steifigkeit durch die Batteriewanne gegeben. Gleichzeitig wird vermieden, dass im Falle eines Fahrzeugcrashes die Batteriewanne unnötigerweise einreißen würde, so dass keine Inhaltsstoffe der Batterien an die Umgebung gelangen und somit ein Umweltschutz sichergestellt wird.

Es hat sich erfindungsgemäß als vorteilig erwiesen, wenn folgende Stahllegierung verwendet wird mit den Legierungsbestandteilen, ausgedrückt in Gew.%

| | | | |
|---|---|---|---|
| C | min. 0,06 max. 0,13 | bevorzugt | min. 0,07 max. 0,11 |
| Si | max. 0,7 | bevorzugt | min. 0,02 max. 0,5 |
| Mn | max. 1,8 | bevorzugt | min. 1,2 max. 1,7 |
| P | max. 0,05 | bevorzugt | max. 0,03 |
| S | max. 0,05 | bevorzugt | max. 0,01 |
| Al | max. 0,1 | bevorzugt | min. 0,02 max. 0,07 |
| Cu | max. 0,2 | | |
| Ti | max. 1,2 | bevorzugt | min. 0,03 bis 0,2 |
| Nb | max. 0,1 %; | bevorzugt | 0,04 - 0,1 % |
| B | max. 0,003 %; | bevorzugt | bis 0,002 % |
| Cr | max. 0,15 % | | |
| Mo. | max. 0,1 % | | |
| V | max. 0,1 % | | |

Rest Eisen und erschmelzungsbedingte Verunreinigungen.

Als weiterer Vorteil wird eine vorbeschichtete Platine verwendet, mit einer Beschichtung auf Aluminium-Silicium-Basis oder bevorzug einer Beschichtung auf Zink-Basis. Hierbei findet eine Erwärmung einer Aluminium Silicium beschichteten Platine auf größer AC3 innerhalb von mindestens 120 s, alternativ bei einer Zink beschichteten Platine eine Erwärmung auf größer AC1 innerhalb von mindestens 60 s statt. Hierbei ist es möglich, dass die Beschichtungen mit dem Grundwerkstoff, welcher vorzugsweise gemäß obengenannter Stahlpositionen ausgebildet ist, durchlegiert.

Zusätzliche Reinigungsschritte vor einer nachträglichen Lackierung der warmgeformten Wanne können durch die Vorbeschichtung entfallen.

Weiterhin besonders bevorzugt wird eine Blechdicke der Platine zwischen 0,5 mm und 2,5 mm gewählt, vorzugsweise zwischen 1 mm und 2 mm. Die Platine selbst weist eine Abmessung größer 1300 mm mal 1800 mm auf, insbesondere größer 1500 mm mal 2300 mm.

In Verbindung mit den auftretenden Umformstufen wird ein Radius zwischen Boden und Seitenwand bzw. zwischen Seitenwand und Flansch bezogen auf ein Wandstärkenverhältnis von 5 bis 10 eingestellt. Dies bedeutet der Radius ist 5 bis 10mal größer als die Wandstärke. Auch durch dieses Verhältnis hat sich ein positiver Umformvorgang bei gleichzeitig sich einstellender Dauerfestigkeit der späteren Batteriewanne herausgestellt. Auch hier wird nicht durch zu starke Umformgradienten während des Tiefziehvorganges des Warmformens eine Rissinitiierung begünstigt, sondern vermieden.

Zur weiteren Versteifung können im Boden der Batteriewanne Versteifungssicken während des Warmumformvorganges einstückig und werkstoffeinheitlich ausgebildet werden.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung. Es zeigen
- Fig. 1: eine erfindungsgemäße Warmformlinie zur Herstellung einer Batteriewanne,
- Fig. 2: eine Batteriewanne in perspektivischer Ansicht,
- Fig. 3: die Batteriewanne in einer Längsschnittansicht und
- Fig. 4: eine schematische Querschnittsansicht durch die Batteriewanne.

In den Figuren werden für gleiche Bauteile dieselben Bezugszeichen verwendet, auch eine wiederholte Beschreibung aus Vereinfachungsgründen entfällt.

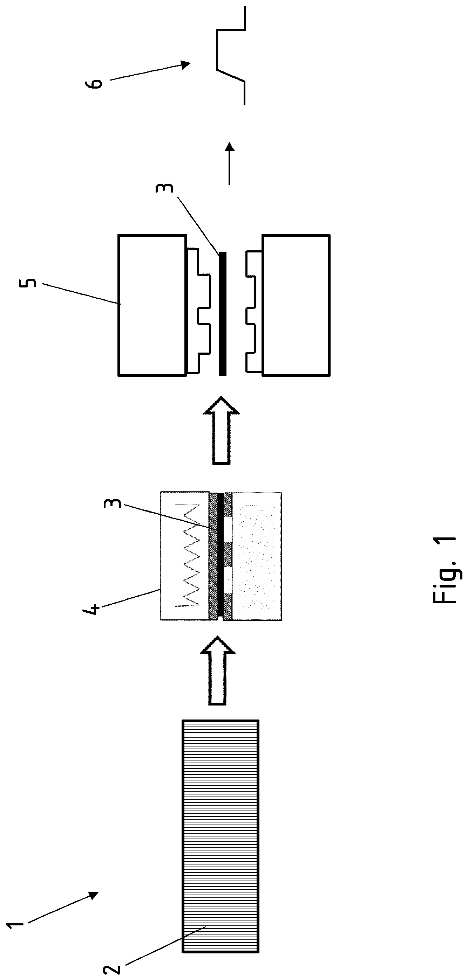

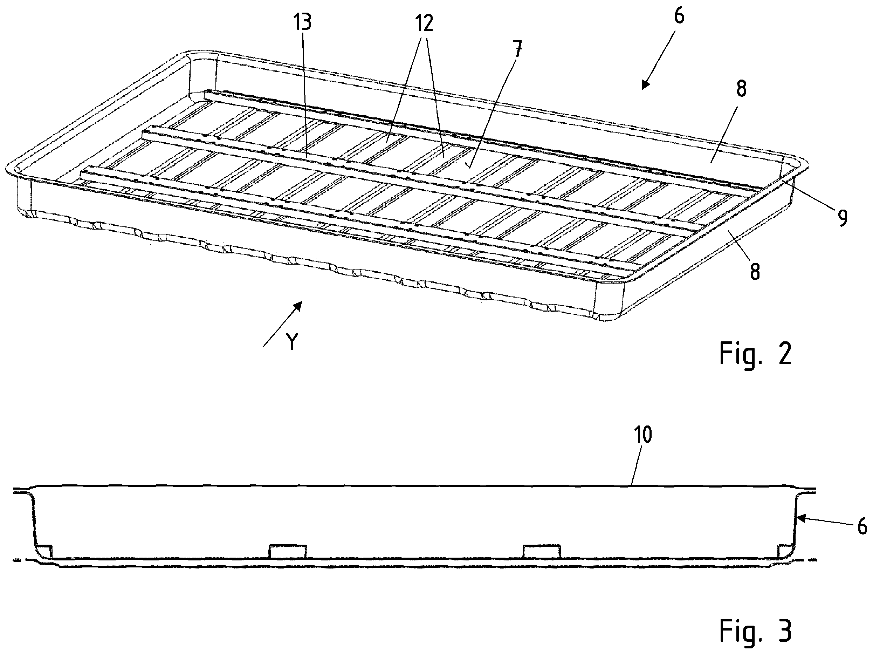

Figur 1 zeigt das erfindungsgemäße Verfahren. Zunächst wird in einer Warmformlinie 1 eine Platine 2 bereitgestellt. Die Platine 2 wird in einer Ofeneinrichtung 3 erwärmt und als erwärmte Platine 4 dann in eine Umformeinrichtung 5, insbesondere in ein Warmumformpresshärtewerkzeug, eingelegt. Nach Abschluss des Umformvorganges kann dann die so hergestellte Batteriewanne 6 entnommen. Die Batteriewanne 6 selbst ist in Figur 2 in perspektivischer Ansicht dargestellt. Diese weist einen Boden 7 auf, von dem Boden 7 umseitig sich erstreckende Seitenwände 8 sowie umlaufend von Seitenwänden 8 nach außen abstehend ein Flansch 9. Der Flansch 9 dient gemäß Figur 3 dargestellt zur Koppelung mit einem Deckel 10. Im Inneren der so angeordneten Batteriewanne 6 sind dann Batteriespeicher in Form von Akkus 11 bzw. einzelnen Batteriezellen angeordnet. In dem Boden 7 können einstückig und werkstoffeinheitlich Versteifungssicken 12 ausgebildet sein, die sich hier in Kraftfahrzeugquerrichtung Y erstrecken. Im Fall eines Seitencrashs ist somit eine höhere Steifigkeit ausgebildet. Innerhalb der Batterieträgers können beispielsweise Längsträger 13 angeordnet sein. Die Längsträger 13 dienten dann als Aufnahme, beispielsweise als Anschraubpunkte für die Akkumulatoren dienen.

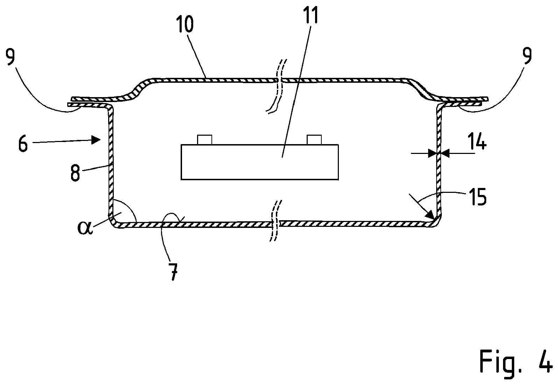

Gemäß der schematischen Längsschnittansicht von Figur 4 ist ein Winkel α zwischen Boden 7 und Seitenwand 8 ausgebildet, zwischen 80° und 90°, insbesondere bei ca. 85°. Hierdurch keine optimale Entnahme aus dem Warmumformwerkzeug nach Abschluss des Presshärtevorganges sichergestellt werden. Es ergibt sich ein Verhältnis von Wandstärke 14 zu Radius 15, von 5 bis 10. Dies bedeutet der Radius 15 ist ca. 5mal bis 10mal so groß im Vergleich zu der Wandstärke 14 der Batteriewanne 6. Ein analoger Winkel sowie auch Radius 15 ergibt sich dann im Übergang von Seitenwand 8 zu Flansch 9. Nicht näher dargestellt sind Lochungen innerhalb des Flansches 9 bzw. ein Randbeschnitt des Flansches 9, welches ebenfalls in dem Warmumformpresshärtewerkzeug gemäß Figur 1 durchgeführt werden kann. Jedoch auch in einem Folgeverbundwerkzeug durchgeführt werden kann.

### Bezugszeichen:

- 1 -: Warmumformlinie
- 2 -: Platine
- 3 -: erwärmte Platine
- 4 -: Ofeneinrichtung
- 5 -: Warmumform- und Presshärtewerkzeug
- 6 -: Batteriewanne
- 7 -: Boden
- 8 -: Seitenwand
- 9 -: Flansch
- 10 -: Deckel
- 11 -: Akku
- 12 -: Sicke
- 13 -: Längsträger
- 14 -: Wandstärke
- 15 -: Radius

- Y -: Kraftfahrzeugquerrichtung
- α -: Winkel

## Patentansprüche

1. Verfahren zur Herstellung einer Batteriewanne (6) für einen Batterieträger eines Kraftfahrzeuges, **gekennzeichnet durch** folgende Verfahrensschritte:
• Bereitstellen einer Platine (2) aus einer härtbaren Stahlblechlegierung, optional ist die Platine (2) vorbeschichtet,
• Vollständiges Erwärmen auf eine Temperatur größer AC1, insbesondere größer AC3,
• Warmumformen und Presshärten der Platine (2), zu einer Batteriewanne (6) mit einem flächigen Boden (7), davon umlaufend abstehenden Seitenwänden (8) und von den Seitenwänden (8) umlaufend abstehendem nach außen orientiertem Flansch (9),
• Randbeschnitt und/oder Lochen der Platine (2) und/oder der umgeformten Batteriewanne (6) bei einer Temperatur zwischen 400° und 700° C,
• Einstellen einer Zugfestigkeit zwischen 350 und 850MPa und einer Dehngrenze A50 von 10 bis 18 %.

2. Verfahren nach Anspruch 1, **dadurch gekennzeichnet, dass** eine Stahllegierung mit folgenden Legierungsbestandteilen, ausgedrückt in Gewichtsprozent verwendet wird, Rest Eisen und erschmelzungsbedingte Verunreinigungen:
| | | | |
|---|---|---|---|
| C | min. 0,06 max. 0,13 | bevorzugt | min. 0,07 max. 0,11 |
| Si | max. 0,7 | bevorzugt | min. 0,02 max. 0,5 |
| Mn | max. 1,8 | bevorzugt | min. 1,2 max. 1,7 |
| P | max. 0,05 | bevorzugt | max. 0,03 |
| S | max. 0,05 | bevorzugt | max. 0,01 |
| Al | max. 0,1 | bevorzugt | min. 0,02 max. 0,07 |
| Cu | max. 0,2 | | |
| Ti | max. 1,2 | bevorzugt | min. 0,03 bis 0,2 |
| Nb | max. 0,1 % | bevorzugt | 0,04 - 0,1 % |
| B | max. 0,003 % | bevorzugt | max. 0,002 % |
| Cr | max. 0,15 % | | |
| Mo. | max. 0,1 % | | |
| V | max. 0,1 % | | |

3. Verfahren nach Anspruch 1 oder 2, **dadurch gekennzeichnet, dass** als Beschichtung eine Al/Si oder ein Zn Beschichtung verwendet wird.

4. Verfahren nach einem der Ansprüche 1 bis 3, **dadurch gekennzeichnet, dass** eine Dehngrenze A50 von 12 bis 16% eingestellt wird.

5. Verfahren nach einem der vorgenannten Ansprüche, **dadurch gekennzeichnet, dass** eine Blechdicke der Platine (2) zwischen 0,5 und 2,5mm, vorzugsweise zwischen 1 und 2mm verwendet wird.

6. Verfahren nach einem der vorgenannten Ansprüche, **dadurch gekennzeichnet, dass** die Batteriewanne (6) in Draufsicht eine rechteckförmige Konfiguration aufweist.

7. Verfahren nach einem der vorgenannten Ansprüche, **dadurch gekennzeichnet, dass** die Platine (2) Abmessungen von größer 1300mm x 1800mm aufweist.

8. Verfahren nach einem der vorgenannten Ansprüche, **dadurch gekennzeichnet, dass** ein Radius (15) zu Wandstärkenverhältnis (14) von 5 bis 10 eingestellt wird.

9. Verfahren nach einem der vorgenannten Ansprüche, **dadurch gekennzeichnet, dass** im Boden (7) Versteifungssicken (12) werkstoffeinheitlich und einstückig ausgebildet werden.

10. Verfahren nach einem der vorgenannten Ansprüche, **dadurch gekennzeichnet, dass** die Batteriewanne nach dem Warmumformen beschichtet, insbesondere KTL-lackiert oder pulverlackiert wird.

## Claims

1. A method for producing a battery tray (6) for a battery carrier of a motor vehicle, **characterized by** the following method steps:
• providing a blank (2) made of a hardenable sheet steel alloy, wherein the blank (2) is optionally precoated;
• completely heating the blank to a temperature above Ac1, in particular above Ac3;
• hot-forming and press-hardening the blank (2) to form a battery tray (6) having a planar bottom (7), side walls (8) projecting therefrom circumferentially, and an outwardly oriented flange (9) projecting circumferentially from the side walls (8);
• trimming the edges and/or punching the blank (2) and/or the formed battery tray (6) at a temperature between 400°C and 700°C; and
• setting a tensile strength of between 350 and 850 MPa and an elongation at break A50 of 10 to 18%.

2. The method according to claim 1, **characterized in that** a steel alloy having the following alloying constituents, expressed in percent by weight, is used, the remainder being iron and impurities resulting from the melting process:
• C: min. 0.06, max. 0.13, preferably min. 0.07, max. 0.11;
• Si: max. 0.7, preferably min. 0.02, max. 0.5;
• Mn: max. 1.8, preferably min. 1.2, max. 1.7;
• P: max. 0.05, preferably max. 0.03;
• S: max. 0.05, preferably max. 0.01;
• Al: max. 0.1, preferably min. 0.02, max. 0.07;
• Cu: max. 0.2;
• Ti: max. 1.2, preferably 0.03 to 0.2;
• Nb: max. 0.1%, preferably 0.04-0.1%;
• B: max. 0.003%, preferably max. 0.002%;
• Cr: max. 0.15%;
• Mo: max. 0.1%; and
• V: max. 0.1%.

3. The method according to claim 1 or 2, **characterized in that** an Al/Si coating or a Zn coating is used as the coating.

4. The method according to any one of claims 1 to 3, **characterized in that** an elongation at break A50 of 12 to 16% is set.

5. The method according to any one of the preceding claims, **characterized in that** a sheet thickness of the blank (2) of between 0.5 and 2.5 mm, preferably between 1 and 2 mm, is used.

6. The method according to any one of the preceding claims, **characterized in that** the battery tray (6) has a rectangular configuration when viewed from above.

7. The method according to any one of the preceding claims, **characterized in that** the blank (2) has dimensions greater than 1300 mm × 1800 mm.

8. The method according to any one of the preceding claims, **characterized in that** a ratio of radius (15) to wall thickness (14) of 5 to 10 is set.

9. The method according to any one of the preceding claims, **characterized in that** reinforcing beads (12) are formed in the bottom (7) integrally and in one piece from the same material.

10. The method according to any one of the preceding claims, **characterized in that** the battery tray is coated after hot forming, in particular by cathodic dip coating or powder coating.

## Revendications

1. Procédé de fabrication d'un bac de batterie (6) pour un support de batterie d'un véhicule automobile, **caractérisé par** les étapes de procédé suivantes:
• mise à disposition d'un flan (2) constitué d'un alliage de tôle d'acier trempable, le flan (2) étant éventuellement prérevêtu ;
• chauffage intégral à une température supérieure à Ac1, notamment supérieure à Ac3;
• formage à chaud et trempe sous presse du flan (2) pour former un bac de batterie (6) présentant un fond plan (7), des parois latérales (8) faisant saillie périphériquement à partir de celui-ci et une bride (9), orientée vers l'extérieur, faisant saillie périphériquement à partir des parois latérales (8);
• détourage des bords et/ou poinçonnage du flan (2) et/ou du bac de batterie (6) formé, à une température comprise entre 400 °C et 700 °C;
• réglage d'une résistance à la traction comprise entre 350 et 850 MPa et d'un allongement à la rupture A50 de 10 à 18 %.

2. Procédé selon la revendication 1, **caractérisé en ce que** l'on utilise un alliage d'acier comprenant les éléments d'alliage suivants, exprimés en pourcentage en poids, le reste étant constitué de fer et d'impuretés résultant de la fusion:
• C: min. 0,06, max. 0,13, de préférence min. 0,07, max. 0,11;
• Si: max. 0,7, de préférence min. 0,02, max. 0,5;
• Mn: max. 1,8, de préférence min. 1,2, max. 1,7;
• P: max. 0,05, de préférence max. 0,03;
• S: max. 0,05, de préférence max. 0,01;
• Al: max. 0,1, de préférence min. 0,02, max. 0,07;
• Cu: max. 0,2;
• Ti: max. 1,2, de préférence 0,03 à 0,2;
• Nb: max. 0,1 %, de préférence 0,04 à 0,1 %;
• B: max. 0,003 %, de préférence max. 0,002 %;
• Cr: max. 0,15 %;
• Mo: max. 0,1 %;
• V: max. 0,1 %.

3. Procédé selon la revendication 1 ou 2, **caractérisé en ce que** l'on utilise comme revêtement un revêtement Al/Si ou un revêtement Zn.

4. Procédé selon l'une quelconque des revendications 1 à 3, **caractérisé en ce qu'**un allongement à la rupture A50 de 12 à 16 % est réglé.

5. Procédé selon l'une quelconque des revendications précédentes, **caractérisé en ce qu'**une épaisseur de tôle du flan (2) comprise entre 0,5 et 2,5 mm, de préférence entre 1 et 2 mm, est utilisée.

6. Procédé selon l'une quelconque des revendications précédentes, **caractérisé en ce que** le bac de batterie (6) présente, en vue de dessus, une configuration rectangulaire.

7. Procédé selon l'une quelconque des revendications précédentes, **caractérisé en ce que** le flan (2) présente des dimensions supérieures à 1300 mm × 1800 mm.

8. Procédé selon l'une quelconque des revendications précédentes, **caractérisé en ce qu'**un rapport entre le rayon (15) et l'épaisseur de paroi (14) de 5 à 10 est réglé.

9. Procédé selon l'une quelconque des revendications précédentes, **caractérisé en ce que** des nervures de renforcement (12) sont réalisées dans le fond (7), d'un seul tenant et dans le même matériau.

10. Procédé selon l'une quelconque des revendications précédentes, **caractérisé en ce que** le bac de batterie est revêtu après le formage à chaud, notamment par peinture cataphorétique ou par revêtement par poudre.
